# EUROPEAN PATENT APPLICATION

(11) **EP 4 847 820 A1**
(43) Date of publication of application: **02.12.2026**
(21) Application number: 25178952.5
(22) Date of filing: 27.05.2025
(51) Int. Cl.: F16L 27/04

(54) **PIVOT JOINT**

(71) Applicant: Uponor Infra Oy, 00240 Helsinki (FI)
(72) Inventor: Ikonen, Jarmo, 15140 Lahti (FI); Havia, Jarkko, 15140 Lahti (FI)
(74) Representative: Fenner, Seraina

(57) **Abstract**

Pivot joint (1) for pipes for detachable connection to a chamber comprising a chamber mount (2) to attach to a chamber, having a side (14) facing the chamber for connecting the pivot joint (1) to the chamber and a side (15) facing away from the chamber for connection of a pipe, wherein the chamber mount (2) has a curved surface (17), a longitudinal axis (18), an adjustable fitting (3), wherein the adjustable fitting (3) has a curved surface (19) and the curved surface (17) of the chamber mount (2) and the curved surface (19) of the adjustable fitting (3) correspond to each other, a seal compression ring (4) and a sealing ring (6), wherein the pivot joint (1) has a fitting locking ring (5), wherein the sealing ring (6) is located between the adjustable fitting (3) and the chamber mount (2), wherein by tightening the fitting locking ring (5) pressure is exerted on the sealing ring (6) and the sealing ring (6) is deformed so that the pivot joint (1) is watertight.

## Description

The invention relates to a pivot joint for pipes for alienable connection to a chamber comprising a chamber mount to attach to a chamber, having a side facing the chamber for connecting the pivot joint to the chamber and a side facing away from the chamber for connection of a pipe, wherein the chamber mount has a curved surface, a longitudinal axis, an adjustable fitting, wherein the adjustable fitting has a curved surface and the curved surface of the chamber mount and the curved surface of the adjustable fitting correspond to each other, a seal compression ring and a sealing ring.

Underground systems for transporting water and collecting rainwater are usually made up of several chambers and other underground basins that are connected to each other with pipes. When connecting and laying the pipes between the elements to be connected, it is usually the case that the connection points are not exactly aligned with each other, resulting in misalignment. If chambers are to be connected to each other, their connections are usually not aligned, which complicates the connection and additional bends or elbows usually have to be installed in the pipe so that the chambers can be connected to each other.

EP 4 179 163 A1 discloses a pivot joint which allows a fluid transport system to rotate around a pivot point. The pivot joint enables a smooth rotational movement and flexibility of the fluid transport system.

The disadvantage here is that the position of the aligned pivot joint cannot be fixed and the tightness can suffer in angled installation as the seal no longer lies optimally against the housing due to the angled position of the joint.

It is the object of the invention to propose a pivot joint that can be fixed in the aligned position and ensures optimum tightness.

This object is achieved according to the invention in that the pivot joint has a fitting locking ring, wherein the sealing ring is located between the adjustable fitting and the chamber mount, wherein by tightening the fitting locking ring pressure is exerted on the sealing ring and the sealing ring is deformed so that the pivot joint is watertight.

The pivot joint for pipes according to the invention is used to connect the pipe to a chamber so that it can be aligned. Such a chamber provides access to underground systems for transporting water, wastewater or collected rainwater and can be used for inspection or access to parts of a sewage transport system. The inventive pivot joint comprising a chamber mount preferably made of plastic to attach to a chamber, wherein the chamber mount is arranged liquid-tight on the chamber. A chamber usually has an outlet and an inlet, each of which has a liquid-tight chamber mount. Of course, there are also chambers that have only one connection or more than two connections on which a chamber mount is arranged. The chamber mount having a side facing the chamber for connecting the pivot joint to liquid-tight the chamber and a side facing away from the chamber for connection of a pipe. The chamber mount has a curved surface preferably a spherical surface, which allows the joint to swivel. The pivot joint has a longitudinal axis, wherein the components of the joint are preferably rotationally symmetrical about the longitudinal axis. The pivot joint comprising an adjustable fitting, preferably made of plastic, wherein the adjustable fitting has a curved surface, preferably the curved surface is spherical in shape. The curved surface of the chamber mount and the curved surface of the adjustable fitting correspond to each other so that the adjustable fitting is aligned with the chamber mount. Preferably, the adjustable fitting can be inclined at least 10° from the longitudinal axis, although the inclination can of course be less, depending on what is required when aligning the pivot joint. The pivot joint comprising also a seal compression ring preferably made of plastic and a sealing ring, wherein the seal compression ring preferably surrounds the adjustable fitting at least zonally. The pivot joint has a fitting locking ring preferably made of plastic, wherein the sealing ring is located between the adjustable fitting and the chamber mount, wherein by tightening the fitting locking ring pressure is exerted on the sealing ring and the sealing ring is deformed so that the pivot joint is watertight. When tightening the fitting locking ring, which presses on the adjustable fitting, the adjustable fitting shifts downwards or in the direction of the chamber respectively inwards along the axis of the connector, wherein the sealing ring between the adjustable fitting and the chamber mount is compressed from one direction and the sealing ring expands in another direction as a result.

Preferably, all components of the pivot joint are made of plastic.

Preferably the seal compression ring is arranged between the fitting locking ring and the adjustable fitting and the tightening force of the fitting locking ring is transmitted to the sealing ring by means of the seal compression ring. As mentioned above, this ensures that the sealing ring expands in such a way that the transitions between the individual components are sealed and that the pivot joint is fixed in an aligned position. Once the fitting locking ring has been tightened, the pivot joint can no longer be adjusted. If, for example, the adjustable fitting is adjusted with an inclination of 5° and the fitting locking ring is tightened, this setting will not change unintentionally, for example during the installation of other elements in the underground system. To change and readjust this setting, the fitting locking ring must first be loosened again.

Advantageous the adjustable fitting is arranged swiveling in the pivot joint. The swiveling arrangement allows the adjustable fitting to be optimally aligned with the pipe to be connected. Preferably, the adjustable fitting tilts on all sides up to 15° from the longitudinal axis of the pivot joint. This is achieved by the corresponding curved surfaces of the adjustable fitting and the chamber mount.

Preferably, the fitting locking ring is designed as a nut with an internal or external thread. Alternatively, a quick-action clamping element is also conceivable with which the pressure on the sealing ring and the position locking is realized.

Preferably the fitting locking is arranged on the chamber mount, on the side facing away from the chamber. At the end of the chamber mount, a thread corresponding to the fitting locking ring is arranged into or onto which the fitting locking ring is screwed up to a stop. This ensures that the pivot joint is sufficiently tightened to fix the alignment and that the sealing ring is sufficiently compressed

Preferably the fitting locking ring and the seal compression ring are formed together as one part. Preferably, the fitting locking ring and seal compression ring are designed as a single plastic part that has been manufactured using injection molding or 3D printing.

Preferable, the seal compression ring at least partially surrounds the adjustable fitting, wherein the seal compression ring is displaceably arranged along the longitudinal axis of the adjustable fitting to exert the pressure on the sealing ring. The seal compression ring can be moved along the clamping path in the pivot joint. The possibility of displacement ensures that the required force is applied to the sealing ring. This means that tightening the fitting locking ring tensions the pivot joint or presses the sealing ring and locks the position of the adjustable fitting.

Preferably a pipe seal is arranged in the seal compression ring. Preferably, the pipe seal is arranged in the seal compression ring preferably at the end facing away from the chamber. This means that the front of the adjustable fitting, wherein the adjustable fitting is partially surrounded by the seal compression ring, is in contact with the pipe seal. As a result, when the fitting locking ring is tightened, the pipe seal between the front of the adjustable fitting and in the seal compression ring is also compressed, which results in a better seal against the pipe. It is advantageous if the seal compression ring has a shoulder against which the opposite side of the pipe seal rests and can therefore not be displaced when the fitting locking ring is tightened.

The seals, i.e., the sealing pressure ring and the pipe seal, can also be injection molded directly onto one of the contact components using a two-component injection molding process.

Preferably, the chamber mount has a concave curved surface on the side facing the chamber in which the adjustable fitting is swiveling arranged with a convex surface. The convex surface of the adjustable fitting is arranged in the concave surface of the chamber mount, allowing the adjustable fitting to swivel. It is advantageous if the curved surfaces have a spherical design, which enables stepless alignment. Preferably, the chamber mount has a first curved surface that corresponds to the curved surface of the adjustable fitting. A stop is arranged at the end of the curved surface of the adjustable fitting facing away from the chamber, wherein this is preferably designed to be circumferential. This serves to ensure that the adjustable fitting can only be tilted to a certain degree. It also serves as an additional guide and support surface for the sealing ring. The chamber mount has a second curved surface, which is offset at a distance parallel to the outside with a larger bending radius. This second curved surface connects to the end of the first curved surface and serves to guide the stop on the adjustable fitting. As a result, the adjustable fitting is guided in the first curved surface on the one hand and guided and supported in the second curved surface with the stop on the other hand.

Preferably, the seal compression ring has a ring on the chamber facing side that presses on the sealing ring, causing the sealing ring to expand radially and be compressed axially. A ring is arranged on the front of the seal compression ring that faces the chamber to increase the contact surface that presses on the sealing ring and to ensure that the sealing ring expands radially outwards and is pressed axially

Preferably, a pipe seal is arranged in the adjustable fitting. This ensures tightness between the pipe and the pivot joint.

Preferably, the seal compression ring has a profile that lies against the adjustable fitting in the tensioned state and transmits the pressure to the sealing ring that the sealing ring expands. The profile preferably has a curved surface that lies optimally against the outer surface of the adjustable fitting. This results in surface pressure on the adjustable fitting due to the circumferential profile, which presses on the curved outer surface of the seal compression ring.

Preferably, the chamber mount has a convex curved surface on the side facing the chamber in which the adjustable fitting is swiveling arranged with a concave surface. The convex surface of the chamber mount is preferably spherical, as is the concave inner side.

All possible embodiments can be freely combined with one another and the method features also apply to the device and vice versa.

Exemplary embodiments of the invention are described by way of the Figures, the invention not being restricted to only the exemplary embodiments, in which:
- Figure 1: shows a longitudinal section of a first embodiment of a pivot joint according to the invention in an untightened state,
- Figure 2: shows a longitudinal section of a first embodiment of a pivot joint according to the invention in a tightened state,
- Figure 3: shows an exploded view of a first embodiment of a pivot joint according to the invention,
- Figure 4: shows a longitudinal section of a second embodiment of a pivot joint according to the invention in a tightened state and
- Figure 5: shows an exploded view of a second embodiment of a pivot joint according to the invention.

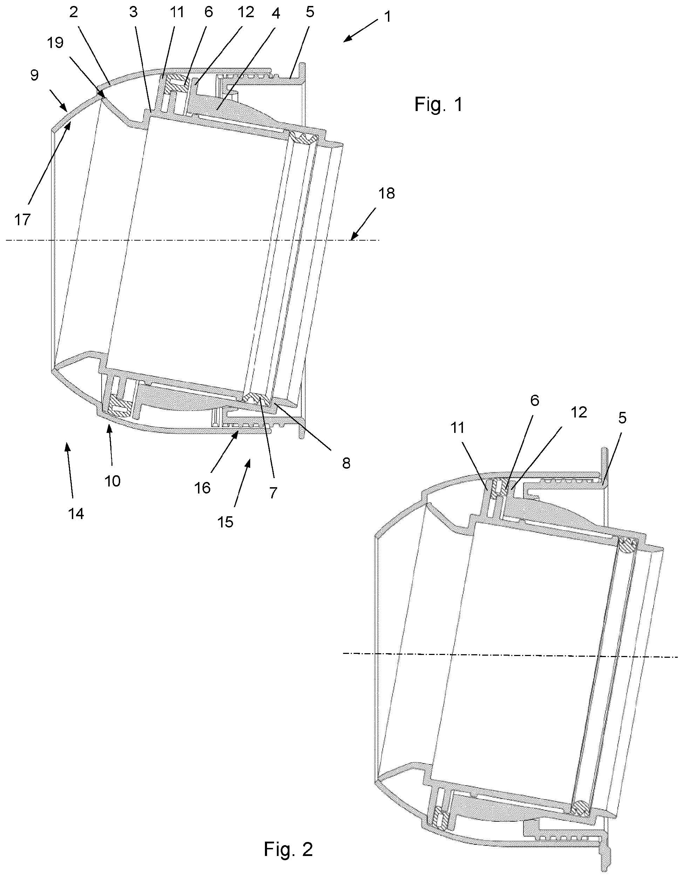

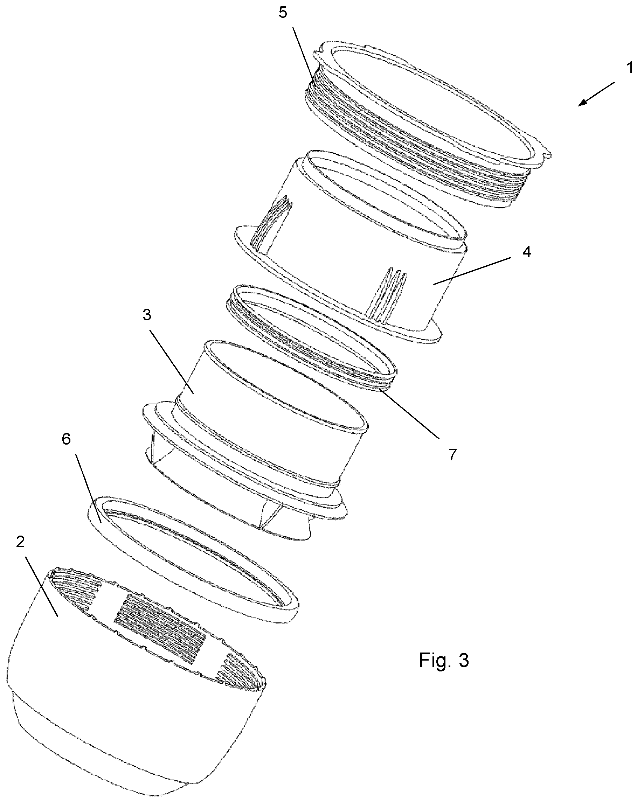

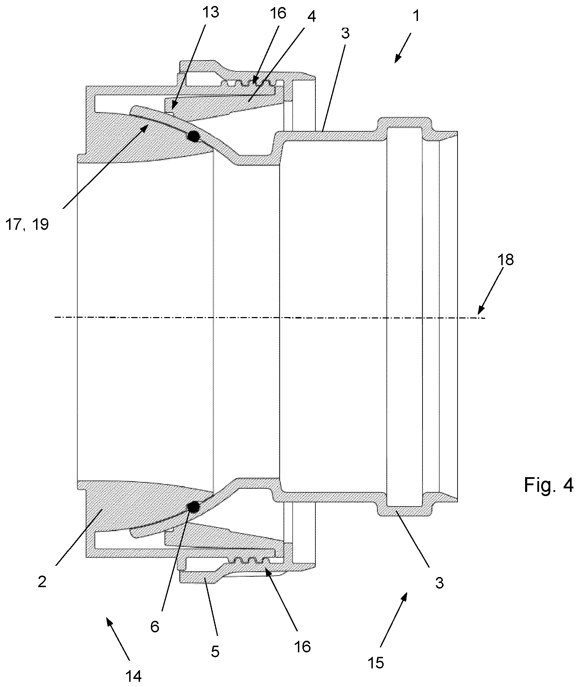

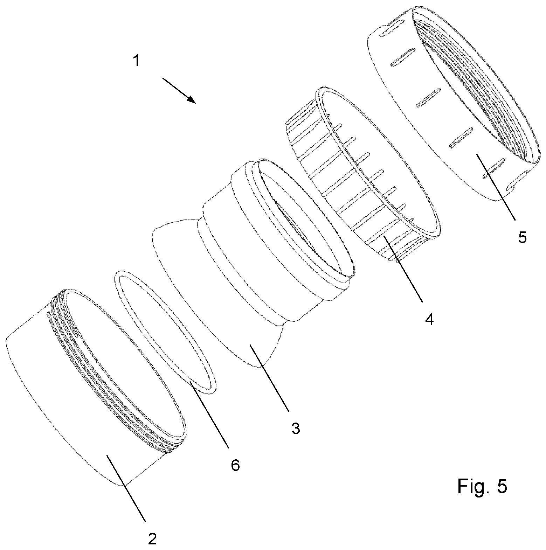

Fig. 1 shows a pivot joint 1 according to the invention for the adjustable connection of a pipe to a chamber. The pivot joint 1 has a chamber mount 2 which is connected to the chamber (not visible). An adjustable fitting 3 is pivotably arranged in the chamber mount 2, i.e. the adjustable fitting 3 can be tilted in any direction from the longitudinal axis 18. This is achieved by the chamber mount 2 having a curved surface with which the curved surface of the adjustable fitting 3 corresponds. The pivot joint 1 also has a seal compression ring 4 and a sealing ring 6 which is arranged between the adjustable fitting 3 and chamber mount 2. At the end of the chamber mount 2 on the side 15 facing away from the chamber is a fitting locking ring 5 arranged with which the pivot joint 1 is tightened. Fig. 1 shows the pivot joint 1 in a loose state. Figs. 2 and 4 show the two embodiments of the pivot joint 1 in a tightened state. By tightening the fitting locking ring 5, the sealing ring 6 is pressed into the width, which ensures a good seal. This is achieved by the fitting locking ring 5 pressing on the seal compression ring 4, which moves in the direction of the chamber, causing the seal compression ring 4 to press on the chamber mount 2 and the sealing ring 6 positioned between them. The change in the sealing ring 6 is clearly visible in Fig. 2, as the sealing ring 6 has become narrower but has expanded radially. For constant tightening, the fitting locking ring 5 preferably has a thread 16, wherein the thread 16 can be designed as an external thread as shown in the first embodiment in Figs. 1 to 3 or as an internal thread as shown in the second embodiment in Figs. 4 and 5.

The adjustable fitting 3 is slidably arranged in the pivot joint 1 along the longitudinal axis 18. If the pivot joint 1 is not yet tightened and no contact pressure is exerted on the adjustable fitting 3 by the seal compression ring 4, the adjustable fitting 3 can be swiveled or tilted in relation to the longitudinal axis 18, as shown in Fig. 1. The alignment of the adjustable fitting 3 is only fixed when the sealing compression ring 4 is tightened by the locking ring 5 and at the same time the sealing ring 6 pressed in such a way that the pivot joint 1 is tight. It has been shown to be preferable if the sealing ring 6 is pressed through a ring 12 arranged on the seal compression ring 4, which causes the sealing ring 6 to expand radially outwards.

To ensure that the connected pipe is tight against the pivot joint 1, a pipe seal 7 is preferably arranged in the seal compression ring 4. Preferably, one side of the pipe seal 7 in axial direction lies against the shoulder 8 on the seal compression ring 4 and the other against the end face of the adjustable fitting 3, wherein the pipe seal 7 remains in position when tightening and the internal diameter of the pipe seal 7 narrows, thus ensuring a good seal.

The first version of the pivot joint 1 shows a chamber mount 2 with a concave curved surface 17 in which the convex curved surface 19 of the adjustable fitting 3 is arranged and corresponds to each other, so that the adjustable fitting 3 can be swiveled. It has been shown to be advantageous if the chamber mount 2 has a first curved surface 9 and a second curved surface 10. The curved surface of the adjustable fitting 3 is pivotably arranged in the first curved surface 9. A stop 11 is arranged at the upper end of the curved surface 19 of the adjustable fitting 3 and projects beyond the diameter of the end of the curved surface 19. This ensures that the adjustable fitting 3 can only tilt up to a certain angle, wherein the angle is preferably no more than 15° from the axis in all directions. The stop 11 is guided in the second curved surface 10, i.e. the second curved surface 10 has a larger radius and adjoins the first curved surface 9 in an outwardly offset manner.

In the second embodiment, the chamber mount 2 has a convex curved surface 17 and the adjustable fitting 3 has the corresponding concave curved surface 19. The sealing ring 6 is arranged between the two surfaces 17, 19. It has been shown to be advantageous if the pipe seal 7 is arranged in the adjustable fitting 3 to ensure tightness between the pivot joint 1 and the pipe. It is advantageous if the curved surfaces 17, 19 are spherical, this enables a smooth and stepless alignment.

As the seal compression ring 4 presses against the curved outer surface of the adjustable fitting 3, it is advantageous if the seal compression ring 4 has a corresponding profile 13 that lies optimally against the outer surface of the adjustable fitting 3 and thus ensures surface pressure along the entire circumference. In the second embodiment, it is also possible that the fitting locking ring 5 and the seal compression ring 4 to be formed together as one part (not shown). Alternatively, instead of a thread, a snap lock can be provided to secure the adjustable fitting 3 in the pivot joint 1.

### Reference numbers

- 1: Pivot joint
- 2: Chamber mount
- 3: Adjustable fitting
- 4: Seal compression ring
- 5: Fitting locking ring
- 6: Sealing ring
- 7: Pipe seal
- 8: Shoulder
- 9: First curved surface
- 10: Second curved surface
- 11: Stop
- 12: Ring
- 13: Profile
- 14: Side facing the chamber
- 15: Side facing away from the chamber
- 16: Thread
- 17: Curved surface of the chamber mount
- 18: Longitudinal axis
- 19: Curved surface adjustable fitting

## Claims

1. Pivot joint (1) for pipes for alienable connection to a chamber comprising a chamber mount (2) to attach to a chamber, having a side facing the chamber (14) for connecting the pivot joint (1) to the chamber and a side facing away from the chamber (15) for connection of a pipe, wherein the chamber mount (2) has a curved surface (17), a longitudinal axis (18), an adjustable fitting (3), wherein the adjustable fitting (3) has a curved surface (19) and the curved surface (14) of the chamber mount (2) and the curved surface (19) of the adjustable fitting (3) correspond to each other, a seal compression ring (4) and a sealing ring (6), **characterized in that** the pivot joint (1) has a fitting locking ring (5), wherein the sealing ring (6) is located between the adjustable fitting (3) and the chamber mount (2), wherein by tightening the fitting locking ring (5) pressure is exerted on the sealing ring (6) and the sealing ring (6) is deformed so that the pivot joint (1) is watertight.

2. Pivot joint (1) of claim 1 **characterized in that** the seal compression ring (4) is arranged between the fitting locking ring (5) and the adjustable fitting (3) and the tightening force of the fitting locking ring (5) is transmitted to the sealing ring (6) by means of the seal compression ring (4).

3. Pivot joint (1) of one of the claims 1 or 2, **characterized in that** the adjustable fitting (3) is arranged swiveling in the pivot joint (1).

4. Pivot joint (1) of one of the claims 1 to 3, **characterized in that** the fitting locking ring (5) is designed as a nut with an internal or external thread (20).

5. Pivot joint (1) of one of the claims 1 to 4, **characterized in that** the fitting locking ring (5) is located on the chamber mount (2), on the side facing away (15) from the chamber.

6. Pivot joint (1) of one of the claims 1 to 5, **characterized in that** the fitting locking ring (5) and the seal compression ring (4) are formed together as one part.

7. Pivot joint (1) of one of the claims 1 to 6, **characterized in that** the seal compression ring (4) at least partially surrounds the adjustable fitting (3), wherein the seal compression ring (4) is movable arranged along the longitudinal axis (18) of the adjustable fitting (3) to exert the pressure on the sealing ring (6).

8. Pivot joint (1) of one of the claims 1 to 7, **characterized in that** a pipe seal (7) is arranged in the seal compression ring (4).

9. Pivot joint (1) of one of the claims 1 to 8, **characterized in that** the chamber mount (2) has a concave curved surface (17) on the side facing (14) the chamber in which the adjustable fitting (3) is swiveling arranged with a convex surface (19).

10. Pivot joint (1) of one of the claims 1 to 9, **characterized in that** the seal compression ring (4) has a ring (12) on the chamber facing side (14) that presses on the sealing ring (6), causing the sealing ring (6) to expand radially and be compressed axially.

11. Pivot joint (1) of one of the claims 1 to 10, **characterized in that** a pipe seal (7) is arranged in the adjustable fitting (3).

12. Pivot joint (1) of one of the claims 1 to 11, **characterized in that** the seal compression ring (4) has a profile (13) that lies against the adjustable fitting (3) in the tensioned state and transmits the pressure to the sealing ring (6) that the sealing ring (6) expands.

13. Pivot joint (1) of one of the claims 1 to 12, **characterized in that** the chamber mount (2) has a convex curved surface (17) on the side facing the chamber (14) in which the adjustable fitting (3) is swiveling arranged with a concave surface (19).
